# EUROPEAN PATENT SPECIFICATION

(11) **EP 4 243 614 B1**
(45) Date of publication and mention of the grant of the patent: **06.11.2024**
(21) Application number: 21807284.1
(22) Date of filing: 10.11.2021
(51) Int. Cl.: A01N 1/02

(54) **COLLOIDAL SOLUTION FOR EX-VIVO LUNG PERFUSION AND STORAGE**
KOLLOIDALE LÖSUNG ZUR EX-VIVO-PERFUSION UND LAGERUNG DER LUNGE
SOLUTION COLLOÏDALE POUR PERFUSION ET STOCKAGE EX-VIVO DES POUMONS

(30) Priority: 12.11.2020 IT 202000027050
(43) Date of publication of application: 20.09.2023
(73) Proprietor: S.A.L.F. S.P.A. LABORATORIO FARMACOLOGICO, 24069 Cenate Sotto (BG) (IT)
(72) Inventor: GAGLIANO, Carmelo, 24069 Cenate Sotto (BG) (IT)
(74) Representative: Calogero, Ida
(86) International application number: PCT/IB2021/060388
(87) International publication number: WO 2022/101791

(56) References cited:
- WO-A1-2004/052098
- US-A- 5 723 281
- US-A1- 2002 102 720
- US-A1- 2018 199 566
- CHEN FENGSHI ET AL: "Development of new organ preservation solutions in Kyoto University", YONSEI MEDICAL JOURNAL, YONSEI UNIVERSITY, KI, vol. 45, no. 6, 31 December 2004 (2004-12-31), pages 1107 - 1114, XP002489271, ISSN: 0513-5796

## Description

The present invention relates to a colloidal solution free of human or animal blood derivatives for the *ex-vivo* perfusion, regeneration and storage of the lungs before transplantation.

The lungs are very delicate organs, easily susceptible to infections following the forced ventilation to which a patient is subjected when in intensive care, and very difficult to keep intact during explantation and subsequent transportation for donation.

In general it is possible to reuse only 15-30% of the organs that are made available by donors for transplantation. A very low percentage, especially considering that there are often no alternative therapies to transplantation for treating some lung diseases, such as terminal respiratory failure.

The Ex-vivo-Lung-Perfusion (EVLP) technique involves isolating the organ to be transplanted from the donor's body, and through an extracorporeal circuit, the lung is perfused with a storage solution that preserves cellular integrity and maintains the stability of the organ under conditions of constant humidity and temperature for the period necessary for effecting the transplantation procedures, the verification of suitability, and any possible transportation.

This method not only allows the lungs to be kept alive for as long as possible, but also regenerates edematous lungs or lungs affected by bacterial infections.

The storage solution used in the perfusion of the lungs prolongs the stability of the organ through mechanical and chemical-physical mechanisms which are summarized hereunder:
- through osmotic characteristics of the solution;
- through the electrolytic composition of the solution;
- through mechanical protection of the endothelium of the vessels.

In the clinical context, during solid organ transplantation, due to the interruption of the vascular support, autolytic phenomena are inevitably triggered, linked to the separation from its own physiological context which guarantees functionality and homeostasis.

As a whole, these phenomena can be attributed to a rapid decline in the ATP reserves within the cell and to the reduced availability of energy sources.

This inevitably involves the redistribution within the cellular systems of metabolic substrates, an enormous variation in the electrolyte composition, a massive reduction in the pH and the activation, more generally, of some cellular processes such as proteolysis, lipolysis and lipid peroxidation. The excess of reactive oxygen species (ROS), in this phase, must therefore be considered as the natural consequence of this cascade of events. The nature of these processes is finely regulated at the molecular level, through the activation of well-defined pathways on which cellular systems leverage to ensure survival under unfavourable environmental conditions.

There are currently essentially two storage methods in the isolated lung: a first technique involves the interruption of ischemic damage through controlled hypothermia (static cold storage), a second is effected through pulsatile perfusion in hypothermia by means of a specific instrumentation (hypothermic machine perfusion). Both of these methods involve the use of organ conditioning solutions and the re-implementation of an adequate cell volume.

Organ conditioning solutions currently available on the market contain human albumin as oncotic agent such as STEEN solution ^{™}.

The presence of albumin, however, gives the solution a series of weaknesses. Human albumin is in fact prepared from whole blood, plasma and serum of healthy human donors that may contain HbsAg, HCV, HIV, antibodies as contaminants with an impact on the health of the subject in which the lung is implanted (antibody antigenic reaction). Furthermore, when using human albumin there is a significant risk of the transmission of viral, bacterial or prion infections present as contaminants.

The authors of the present invention have now developed an aqueous colloidal solution free of human albumin suitable for the perfusion and regeneration of lungs isolated before implantation, which, containing an organic molecule for regulating the oncotic pressure, does not show the disadvantages or risks of the solutions currently used for the storage of organs.

The present invention therefore relates to a sterile aqueous colloidal solution comprising hydroxyethyl starch as oncotic agent at a concentration ranging from 45 to 55 g/L, dextran from 4 to 6 g/L, together with one or more osmotic agents, a buffer system and electrolytes for use in the medical field for *ex-vivo* perfusion and storage of isolated lungs to be transplanted.

The hydroxylated starch (HES PM 130; MS 0.42) present in the aqueous solution (water for injectable preparations) as oncotic agent is a modified starch, a branched-chain polysaccharide which increases the viscosity of the solution and the oncotic pressure. The presence of the hydroxylated starch oncotic agent in the solution according to the invention has the function of maintaining the oncotic pressure at the level of the capillaries and pulmonary alveoli and counteracting the possible formation of edema due to interruption of the passage of blood.

In a preferred embodiment of the invention the hydroxyethyl starch is present at a concentration equal to 50 g/L.

The dextran present in the aqueous solution is a glucose polymer which forms highly branched molecules and increases the viscosity of the solution forming colloids. It has the function of protecting the endothelium of the small capillaries of the pulmonary alveolus from the formation of clots. In a preferred embodiment of the invention, dextran is present in the solution at a concentration equal to 5 g/L.

The osmotic agent present in the solution is preferably selected from the group consisting of sodium chloride, calcium chloride dihydrate and glucose monohydrate or a combination thereof. According to a preferred embodiment, the sterile aqueous colloidal solution according to the invention has an osmolarity ranging from 280 to 350 mOsm/kg and a density ranging from 1.00 to 1.05 g/cm³.

In a particularly preferred embodiment, the buffer system comprises sodium bicarbonate as pH regulator and sodium phosphate monobasic dihydrate as regulator of the buffer system. The pH of the solution is preferably kept at around neutrality between 7.0 -- 7.5.

The solution is sterile and non-pyrogenic, i.e. free of endotoxins, viruses, prions, bacteria, antibodies, antigens and derivatives from human or animal blood (i.e. albumin).

The electrolytic composition of the solution ensures maintenance of the chemical-physical balance of the cells. The electrolytic equilibrium is preferably maintained by the addition to the solution of one or more monohydrate or polyhydrate chlorinated salts, such as for example potassium chloride and magnesium chloride hexahydrate. Even more preferably, the above-mentioned chlorinated salts are present in the solution at a concentration within the ranges described in the following Table 1.

**Table 1**

| **COMPONENT** | **g/l** | **Range** | **CAS Nr.** |
|---|---|---|---|
| Sodium chloride | 8 | 7.2-8.8 g/l | 7647-14-5 |
| Potassium chloride | 0.34 | 0.30-0.38 g/l | 7447-40-7 |
| Calcium chloride Dihydrate | 0.22 | 0.2-0.3 g/l | 10035-04-08 |
| Magnesium chloride Hexahydrate | 0.24 | 0.2-0.3 g/l | 7791-18-6 |
| Total chlorides | | 130-160 mmoles/l | |

In a preferred embodiment of the invention, the composition of the colloidal aqueous storage solution is indicated in the following Table 2:

**Table 2**

| **COMPONENT** | **g** | **mMoles** | **FUNCTION** | **CAS Nr.** |
|---|---|---|---|---|
| Hydroxyethyl starch (HES) 13010.42 | 50 | / | Oncotic agent | 9005-27-0 |
| Dextran 40 | 5 | / | Colloidal agent | 9004-54-0 |
| | | | Increases the viscosity of the solution. | |
| Sodium chloride | 8 | 136.8 | Osmotic agent. | 7647-14-5 |
| | | | Makes the solution isotonic. | |
| Glucose monohydrate | 2.18 | 11 | Osmotic agent | 5996-10-1 |
| Potassium chloride | 0.34 | 4.6 | Osmotic agent | 7447-40-7 |
| | | | Maintains the cellular electrolytic equilibrium | |
| Calcium chloride dihydrate | 0.22 | 1.5 | Osmotic agent | 10035-04-08 |
| | | | Increases the osmolarity of the solution | |
| Magnesium chloride hexahydrate | 0.24 | 1.2 | Osmotic agent | 7791-18-6 |
| | | | Maintains the cellular electrolytic equilibrium. | |
| Sodium bicarbonate | 1.26 | 15 | pH regulator | 144-55-8 |
| sodium phosphate monobasic dihydrate | 0.19 | 1.2 | Buffer system regulator | 13472-35-0 |
| Water for injectable preparations | enough to 1,000 mL | | Solvent | |

The ions are present in the solution in such quantity as to guarantee the extracellular electrolytic composition.

The sterile aqueous colloidal solution according to the invention can further comprise a chelating agent for maintaining the stability of the sodium bicarbonate, such as, for example, the sodium salt EDTA.

The present invention also relates to the use of the sterile aqueous colloidal solution detailed above for the *ex-vivo* perfusion and storage of isolated lungs to be transplanted.

By applying the aqueous colloidal storage solution according to the invention to the *ex-vivo* pulmonary perfusion technique (EVLP), the suitability for organ transplantation has in fact been improved.

The sterile aqueous colloidal solution according to the invention is preferably packaged in PVC-free medical plastic containers (such as for example medical bags) with double sterile wrapping.

Finally, the invention contemplates a process for the preparation of the aqueous colloidal storage solution described above, comprising the following steps:
a) dissolution of the components of the aqueous colloidal storage solution described above in a volume of water for injectable preparations equal to approximately 80% of the final volume;
b) addition of sodium metabisulfite and EDTA sodium salt;
c) pH adjustment around neutrality by the addition of NaOH (1Nj or HCl (1N);
d) bringing to volume by the addition of water for injectable preparations;
e) filtration at 0.2 microns;
f) filling of the bags under a laminar flow;
g) sterilization of the bags in an autoclave at 115°C-118°C.

The addition of sodium metabisulfite in step b) is preferably effected at a concentration ranging from 0.2 g/L to 0.4 g/L, preferably 0.3 g/L.

According to a preferred embodiment, the sodium metabisulfite is added in combination with medical nitrogen.

The addition of sodium metabisulfite in the dissolution phase allows the oxidation processes of the organic molecules present in the solution to be reduced. The above-mentioned component, during the subsequent sterilization phase, releases sulfur dioxide which acts as an adjuvant for the reduction of the hot oxidation processes of the organic molecules present in the mixture:
The chemical reaction that is generated is the following:

2H⁺ + Na₂S₂O₅ → 2Na + 2SO₂ + H₂O

This is a technological expedient for preserving the chemical-physical characteristics of the molecules in solution during the sterilization phase.

The sterilization takes place by filtration at 0.2 microns and subsequent autoclave sterilization of the bags containing the solution at a T°C 115-118°C F0>8. Sterilization eliminates all forms of life present in the solution and on the surface of the bag making the device sterile in its entirety. The sterility of the surface allows the product to be used in the operating theatre, minimizing the risk of microbial and viral contamination of the patient and the surrounding environment.

The whole production process from the preparation phase to the filling phase of the non-sterile bag must be effected under vacuum conditions and in the presence of nitrogen (oxygen content in the bulk < 1 ppm).

Finally, a 100% visual inspection of the bags forming the lot is effected and packaging in labelled cardboard boxes.

## Claims

1. A sterile aqueous colloidal solution comprising the following components:
- hydroxyethyl starch at a concentration within the range of 45-55 g/L;
- dextran at a concentration within the range of 4-6 g/L;
- sodium metabisulfite and EDTA sodium salt;
together with one or more osmotic agents, a buffer system and electrolytes, for use in the medical field for *ex-vivo* perfusion and storage of isolated lungs to be transplanted.

2. The sterile aqueous colloidal solution for use according to claim 1, wherein hydroxyethyl starch is present at a concentration of 50 g/L.

3. The sterile aqueous colloidal solution for use according to anyone of claims 1-2, wherein dextran is present at a concentration of 5 g/L.

4. The sterile aqueous colloidal solution for use according to anyone of claims 1-3, wherein said one or more osmotic agents are selected from the group consisting of sodium chloride, calcium chloride dihydrate, glucose monohydrate and a combination thereof.

5. The sterile aqueous colloidal solution for use according to anyone of claims 1-4, wherein said buffer system comprises sodium bicarbonate and sodium phosphate monobasic dehydrate to keep the pH between 7.0-7.5.

6. The sterile aqueous colloidal solution for use according to anyone of claims 1-5, wherein said electrolytes derive from one or more chlorinated salts, selected from the group consisting of potassium chloride, magnesium chloride hexahydrate or anhydrous, calcium chloride dihydrate or anhydrous, and sodium chloride.

7. The sterile aqueous colloidal solution for use according to claim 6, wherein the concentration of said chlorinated salts is within the range of 130.00-160.00 mmoles/l of total chloride.

8. Use of the sterile aqueous colloidal solution according to anyone of claims 1-7 for *ex-vivo* perfusion, regeneration and storage of the lungs to be transplanted.

9. A process for the preparation of the sterile aqueous colloidal solution according to anyone of claims 1-7, comprising the following steps:
a) dissolution of the components of the solution according to anyone of claims 1-7 in a volume of water for injectable preparations equal to about 80% of the final volume;
b) addition of sodium metabisulfite and EDTA sodium salt;
c) pH adjustment around neutrality by the addition of NaOH or HCl;
d) bringing to volume by the addition of water for injectable preparations;
e) filtration at 0,2 microns;
f) filling of the bags under a laminar flow;
g) sterilization of the bags in an autoclave at 115°C-118°C.

10. The process according to claim 9, wherein sodium metabisulfite is added in step b) at a concentration within the range of 0.2 g/L-0.4 g/L, preferably 0.3 g/L.

## Patentansprüche

1. Sterile wässrige kolloidale Lösung, umfassend die folgenden Komponenten:
- Hydroxyethylstärke in einer Konzentration im Bereich von 45-55 g/L;
- Dextran in einer Konzentration im Bereich von 4-6 g/L;
- Natriummetabisulfit und EDTA-Natriumsalz;
zusammen mit einem oder mehreren osmotischen Mitteln, einem Puffersystem und Elektrolyten zur Verwendung im medizinischen Bereich für die *ex vivo* Perfusion und Lagerung isolierter zu transplantierender Lungen.

2. Sterile wässrige kolloidale Lösung zur Verwendung nach Anspruch 1, wobei Hydroxyethylstärke in einer Konzentration von 50 g/L vorliegt.

3. Sterile wässrige kolloidale Lösung zur Verwendung nach einem der Ansprüche 1-2, wobei Dextran in einer Konzentration von 5 g/L vorliegt.

4. Sterile wässrige kolloidale Lösung zur Verwendung nach einem der Ansprüche 1-3, wobei das eine oder die mehreren osmotischen Mittel aus der Gruppe ausgewählt sind, die aus Natriumchlorid, Calciumchloriddihydrat, Glukosemonohydrat und einer Kombination davon besteht.

5. Sterile wässrige kolloidale Lösung zur Verwendung nach einem der Ansprüche 1-4, wobei das Puffersystem Natriumbicarbonat und einbasiges Natriumphosphatdehydrat umfasst, um den pH-Wert zwischen 7,0-7,5 zu halten.

6. Sterile wässrige kolloidale Lösung zur Verwendung nach einem der Ansprüche 1-5, wobei sich die Elektrolyte aus einem oder mehreren chlorierten Salzen ableiten, ausgewählt aus der Gruppe bestehend aus Kaliumchlorid, Magnesiumchloridhexahydrat oder wasserfrei, Calciumchloriddihydrat oder wasserfrei und Natriumchlorid.

7. Sterile wässrige kolloidale Lösung zur Verwendung nach Anspruch 6, wobei die Konzentration der chlorierten Salze im Bereich von 130,00-160,00 mmol/l Gesamtchlorid liegt.

8. Verwendung der sterilen wässrigen kolloidalen Lösung nach einem der Ansprüche 1-7 für die *ex vivo* Perfusion, Regeneration und Lagerung der zu transplantierenden Lunge.

9. Verfahren zur Herstellung der sterilen wässrigen kolloidalen Lösung nach einem der Ansprüche 1-7, umfassend die folgenden Schritte:
a) Auflösung der Komponenten der Lösung nach einem der Ansprüche 1-7 in einem Wasservolumen für injizierbare Präparate gleich etwa 80% des Endvolumens;
b) Zugabe von Natriummetabisulfit und EDTA-Natriumsalz;
c) pH-Einstellung um die Neutralität durch Zugabe von NaOH oder HCl;
d) durch Zugabe von Wasser für injizierbare Präparate, Bringen auf das Volumen;
e) Filtration bei 0,2 Mikrometer;
f) Befüllen der Beutel unter laminarer Strömung;
g) Sterilisation der Beutel in einem Autoklaven bei 115°C-118°C.

10. Verfahren nach Anspruch 9, wobei Natriummetabisulfit in Schritt b) in einer Konzentration im Bereich von 0,2 g/L-0,4 g/L, vorzugsweise 0,3 g/L, zugegeben wird.

## Revendications

1. Solution colloïdale aqueuse stérile comprenant les composants suivants :
- amidon hydroxyéthylique à une concentration comprise entre 45 et 55 g/L ;
- dextran à une concentration comprise entre 4 et 6 g/L ;
- métabisulfite de sodium et sel de sodium EDTA ;
avec un ou plusieurs agents osmotiques, un système tampon et des électrolytes, pour utilisation dans le domaine médical pour *ex-vivo* perfusion et stockage de poumons isolés destinés à être transplantés.

2. Solution colloïdale aqueuse stérile pour utilisation selon la revendication 1, dans laquelle l'hydroxyéthylamidon est présent à une concentration de 50 g/L.

3. Solution colloïdale aqueuse stérile pour utilisation selon l'une des revendications 1 et 2, dans laquelle le dextran est présent à une concentration de 5 g/L.

4. Solution colloïdale aqueuse stérile pour utilisation selon l'une des revendications 1 à 3, dans laquelle un ou plusieurs agents osmotiques sont choisis dans le groupe constitué par le chlorure de sodium, le chlorure de calcium dihydraté, le glucose monohydraté et une combinaison de ceux-ci.

5. Solution colloïdale aqueuse stérile pour utilisation selon l'une des revendications 1 à 4, dans laquelle le système tampon comprend du bicarbonate de sodium et du phosphate de sodium monobasique déshydraté pour maintenir le pH entre 7,0 et 7,5.

6. Solution colloïdale aqueuse stérile pour utilisation selon l'une des revendications 1 à 5, dans laquelle les électrolytes proviennent d'un ou de plusieurs sels chlorés, choisis dans le groupe constitué par le chlorure de potassium, le chlorure de magnésium hexahydraté ou anhydre, le chlorure de calcium dihydraté ou anhydre, et le chlorure de sodium.

7. Solution colloïdale aqueuse stérile pour utilisation selon la revendication 6, dans laquelle la concentration de ces sels chlorés est comprise entre 130,00 et 160,00 mmoles/1 de chlorure total.

8. Utilisation de la solution colloïdale aqueuse stérile selon l'une des revendications 1 à 7 pour *ex-vivo* la perfusion, la régénération et le stockage des poumons à transplanter.

9. Procédé de préparation de la solution colloïdale aqueuse stérile selon l'une quelconque des revendications 1 à 7, comprenant les étapes suivantes :
a) dissolution des composants de la solution selon l'une des revendications 1 à 7 dans un volume d'eau pour préparations injectables égal à environ 80 % du volume final ;
b) ajout de métabisulfite de sodium et de sel de sodium EDTA ;
c) ajustement du pH autour de la neutralité par l'ajout de NaOH ou de HCl ;
d) mise en volume par addition d'eau pour les préparations injectables ;
e) filtration à 0,2 micron ;
f) remplissage des sacs sous un flux laminaire ;
g) stérilisation des sacs dans un autoclave de 115 °C à 118 °C.

10. Procédé selon la revendication 9, dans lequel le métabisulfite de sodium est ajouté à l'étape b) à une concentration comprise entre 0,2 g/L et 0,4 g/L, de préférence 0,3 g/L.
